# EUROPÄISCHE PATENTSCHRIFT

(11) **EP 2 983 897 B1**
(45) Veröffentlichungstag und Bekanntmachung des Hinweises auf die Patenterteilung: **26.03.2025**
(21) Anmeldenummer: 14725599.6
(22) Anmeldetag: 04.04.2014
(51) Int. Cl.: B29C 64/165, B33Y 70/00, B33Y 10/00

(54) **MATERIALSYSTEM UND VERFAHREN ZUM HERSTELLEN DREIDIMENSIONALER MODELLE MIT STABILISIERTEM BINDER**
MATERIAL SYSTEM AND METHOD FOR PRODUCING THREE-DIMENSIONAL MODELS USING A STABILIZED BINDER
SYSTÈME DE MATÉRIAUX ET PROCÉDÉ DE FABRICATION DE MODÈLES TRIDIMENSIONNELS CONTENANT UN LIANT STABILISÉ

(30) Priorität: 08.04.2013 DE 102013005855
(43) Veröffentlichungstag der Anmeldung: 17.02.2016
(73) Patentinhaber: voxeljet AG, 86316 Friedberg (DE)
(72) Erfinder: MÖGELE, Florian, 86459 Gessertshausen (DE); GÜNTHER, Daniel, 81317 München (DE)
(74) Vertreter: Hoefer & Partner Patentanwälte mbB
(86) Internationale Anmeldenummer: PCT/DE2014/000168
(87) Internationale Veröffentlichungsnummer: WO 2014/166469

(56) Entgegenhaltungen:
- EP-A2- 1 524 049
- WO-A2-2010/049515
- US-A- 5 851 465

## Beschreibung

Die Erfindung betrifft ein Materialsystem und Verfahren zum Herstellen dreidimensionaler Modelle.

In der europäischen Patentschrift EP 0 431 924 B1 wird ein Verfahren zur Herstellung dreidimensionaler Objekte aus Computerdaten beschrieben. Dabei wird ein Partikelmaterial in einer dünnen Schicht auf eine Plattform aufgetragen und dieses selektiv mittels eines Druckkopfes mit einem Bindermaterial bedruckt. Der mit dem Binder bedruckte Partikelbereich verklebt und verfestigt sich unter dem Einfluss des Binders und gegebenenfalls eines zusätzlichen Härters. Anschließend wir die Plattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen entsteht so ein dreidimensionales Objekt.

Dieses aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann vom Restpulver z.B. durch Abbürsten befreit werden.

Das 3D-Drucken auf Basis pulverförmiger Werkstoffe und Eintrag flüssiger Binder ist unter den Schichtbautechniken das schnellste Verfahren.

Mit diesem Verfahren lassen sich verschiedene Partikelmaterialien, -wie beispielsweise natürliche nachwachsende Rohstoffe, polymere Kunststoffe, Metalle, Keramiken und Sande, verarbeiten.

Als Bindesystem kann z.B. ein Feststoff im Partikelmaterial dienen. Dieser wird durch ein aus dem Tintenstrahldruckkopf ausgestoßenes Lösemittel in Lösung gebracht. Nach dem Verflüchtigen des Lösemittels haften die Partikel an den gewünschten Stellen zusammen. Das Bauteil kann aus dem restlichen losen Pulver nach einer gewissen Wartezeit entnommen werden. Diese Wartezeit ist im Allgemeinen lang, da das Lösemittel von dem gelösten Material nur langsam wieder freigegeben wird. Die Verflüchtigung des Lösemittels erzeugt eine gewisse Anhaftung am Bauteil, die nach dem Entpacken entfernt werden muss. Von Nachteil ist dabei, dass das Lösemittel den Druckkopf, der ein Präzisionsbauteil ist und einwandfrei funktionieren muss, angreifen und beschädigen kann. Zudem bedingt der Löseprozess mit anschließendem Wiederverfestigen Schwund im Bauteil und führt damit zu unerwünschten Geometrieabweichungen.

Ein Lösemittel kann ebenso mit Molekülen oder Partikeln beladen werden und zum Einsatz kommen. Dadurch kann der Schwund gesenkt werden. Ebenso kann die Aggressivität des Lösemittels bei gleicher Bauteilfestigkeit herabgesetzt werden. Das Lösemittel muss aber vor dem Entpacken vollständig entfernt werden und die Problematik mit Anhaftungen ist auch hier gegeben.

Eine weitere Möglichkeit ist die Verwendung eines Systems, das chemisch zu einer Verfestigung der eingedruckten Flüssigkeit führt und dadurch die Bindung der Partikel realisiert. Dabei werden die Komponenten des Systems nach Möglichkeit getrennt im System vorgehalten. Erst beim Druckprozess kommt es zu der gewünschten Verfestigungsreaktion.

Ein Beispiel für ein solches System kann ein als Kaltharzprozess bekanntes Verfahren sein. Dabei wird ein mit Säure umhüllter Sand mit Furfurylalkohol in Kontakt gebracht. Dadurch kommt es zu einer chemischen Reaktion, die die vormals flüssigen Komponenten in einen vernetzten Kunststoff übergehen lassen.

Die zum Einsatz kommenden Monomere stellen für den Druckkopf allerdings auch eine Gefahr dar. Oft sind die Monomere für derartige Prozesse in der Aggressivität mit Lösemitteln vergleichbar. Die quasi latent vorhandenen vernetzten Kunststoffe stellen auch permanent ein Risiko für den Druckkopf dar, da sie jederzeit durch Verschmutzungen oder unerwünschte Katalysereaktionen verfestigen und damit den Druckkopf beschädigen können oder ihn zumindest in seiner Funktion beeinträchtigen.

Außerdem sind beide Systeme auf Grund ihrer hohen Reaktivität Gefahrstoffsysteme, die umweltschädlich sein können und nur im industriellen Umfeld Anwendung finden können.

Die US 5,851,465 beschreibt ein 3D Druckverfahren, bei dem Siliziumoxid in Form einer Dispersion auf ein Pulver gedruckt wird, wobei ein Katalysator, eine Base und eine Säure zur pH-Verschiebung Anwendung finden.

Die US 5,660,621 beschreibt eine Binderzusammensetzung, der Siliziumoxid in Form einer Dispersion, einen Katalysator und eine Base umfasst.

Die WO2010/049515A2 beschreibt die Herstellung von geformten Teilen basierend auf organischen Polymeren mittels Ionentauscher- oder Ionenabsorbereigenschaften mittels Pulverbettverfahren.

Die Schriften des Standes der Technik weisen andere Komponenten und Verfahrensschritte auf als die Erfindung und legen diese auch nicht nahe.

Es ist daher Aufgabe der vorliegenden Erfindung ein umweltverträglicheres und die zur Herstellung erforderlichen Maschinenkomponenten schonendes Materialsystem und Verfahren zur Verfügung zu stellen, die die Nachteile des Standes der Technik vermeiden oder zumindest vermindern helfen.

Die der Erfindung zugrunde liegende Aufgabe wird gelöst durch ein Materialsystem nach Anspruch 1 und ein Verfahren nach Anspruch 5.

Bevorzugte Ausführungsformen sind in den Unteransprüchen wiedergegeben.

Die Erfindung stellt vorteilhafter Weise ein Materialsystem und Verfahren bereit, das den Druckkopf des 3D Druckers schont, nicht latent reaktiv ist, eine frühes Entpacken ermöglicht, zu geringem Schwund führt und geringe Umweltschädlichkeit aufweist.

Die erfindungsgemäßen Aspekte können wie folgt dargestellt werden:
In einem Aspekt betrifft die Erfindung ein Materialsystem zum schichtweisen Aufbau von Modellen, umfassend einen Binder, wobei der Binder eine gezielt destabilisierbare wässrige Dispersion ist, und ein Partikelmaterial zum schichtweisen Aufbau und insbesondere ein Materialsystem zum schichtweisen Aufbau von Modellen, umfassend einen Binder, wobei der Binder eine gezielt destabilisierbare wässrige Dispersion ist, und Partikelmaterial zum schichtweisen Aufbau, dadurch gekennzeichnet, dass die wässrige Dispersion als Bestandteil partikuläre Bestandteile umfasst, wobei diese ausgewählt sind aus der Gruppe bestehend aus polymeren Partikeln wie Polystyrol, Polymethylmethakrylat (PMMA), Polyethylmethakrylat (PEMA), oder/und radikalisch erzeugte Mischpolymere, Polyurethane, Resolharze, Novolake, Phenolharze, und wobei die wässrige Dispersion einen pH von 7 - 9 aufweist und das Partikelmaterial oder ein Zusatzstoff zur pH-Änderung zur Destabilisierung mittels einer Reaktion der Dispersion mit dem Partikelmaterial oder dem darin befindlichen Zusatzstoff, einer Säure oder Esterverbindung, enthalten ist.

Es können dabei alle in dem Materialsystem geeigneten und mit den übrigen Komponenten kompatiblen Materialien verwendet werden, vorzugsweise sind die partikulären Bestandteile Moleküle, Nanopartikel, Mikropartikel oder/und Makropartikel.

Die partikulären Bestandteile können in ihrem mittleren Durchmesser variieren, vorzugsweise weisen sie einen mittleren Durchmesser von 5 nm bis 15µm, vorzugsweise von 10nm bis 10µm auf.

Die Ausführungsform des erfindungsgemäßen Materialsystems sind die partikulären Bestandteile ausgewählt aus der Gruppe bestehend aus anorganische Partikeln wie Gläser, Sand, Korund, Bentonite, Tone, amorphe Kieselsäure, Wassergläser, Kohlenstoff, Karbide, Oxidkeramik, Silikatkeramik, oder/und metallische Partikel wie Aluminium, Titan, Eisen, Cobalt, Bronze, Messing, Kupfer, oder/und polymere Partikel wie Polystyrol, Polymethylmethakrylat (PMMA), Polyethylmethakrylat (PEMA), oder/und radikalisch erzeugte Mischpolymere, Polyurethane, Resolharze, Novolake, Phenolharze.

Besonders bevorzugt ist die wässrige Dispersion eine Acrylatdispersion, eine Polyurethandispersion oder eine auf vorpolymerisierten Phenolharzen basierte Dispersion.

Der pH-Wert wird wie erforderlich für das Materialsystem ausgewählt und kann je nach Ausführungsfall unterschiedlich sein. Die wässrige Dispersion weist einen pH von 7 bis 9 auf.

In einer weiterten bevorzugten Ausführungsform umfasst das Partikelmaterial einen Ester und der Binder ein oder mehrere Phenylalkohole.

Das erfindungsgemäße Materialsystem umfasst eine wässrige Dispersion, die eine stabilisierte Dispersion ist.

Besonders bevorzugt ist das Partikelmaterial SiO₂ ist.

In einem weiteren Aspekt betrifft die Erfindung Verfahren zum schichtweisen Aufbau von Modellen, dadurch gekennzeichnet, dass in einer Vorrichtung zum schichtweisen Aufbau von Modellen unter Verwendung eines Materialsystems wie hierin beschrieben: a. eine Pulverschicht mit Partikelmaterial aufgebracht wird und b. selektiv mittels Druckkopf ein Binder aufgebracht wird, Schritte a) und b) solange wiederholt werden bis ein gewünschtes Modell aufgebaut ist, c. der Binder durch eine Destabilisierung aktiviert wird, wobei eine pH-Änderung mittels einer Reaktion der Dispersion mit dem Partikelmaterial oder einem darin befindlichen Zusatzstoff einer Säure oder einer Esterverbindung, durch in Kontakt bringen von Binder mit dem Partikelmaterial des Pulverbettes erfolgt, d. das so erhaltene Modell in üblicher Weise entpackt wird und e. das Modell gegebenenfalls weiteren Bearbeitungsschritten unterzogen wird.

In dem Verfahren der Erfindung wird vorzugsweise die Destabilisierung aufgrund von chemischen Mechanismen erreicht.

In einem bevorzugten Aspekt wird die Destabilisierung durch eine pH-Änderung, Wärmeeintrag oder/und Strahlung erreicht.

In einem weiteren bevorzugten Aspekt erfolgt die Destabilisierung durch das in Kontakt bringen von Binder mit dem Partikelmaterial des Pulverbettes.

Vorzugsweise enthält das Partikelmaterial eine Säure, wodurch bei Kontakt von Binder mit Partikelmaterial eine pH-Änderung erfolgt und es zu einer Destabilisierung kommt.

In dem Verfahren kann die Destabilisierung schichtweise oder am Ende des Schichtauftrages erfolgt.

In dem Verfahren können weitere Bearbeitungsschritte folgen, die im 3D-Druck allgemein bekannt sind. Vorzugsweise ist der weitere Bearbeitungsschritt eine Wärmebehandlung.

In einem weiteren Aspekt ist die Erfindung ein Modell hergestellt nach einem wie oben beschriebenen Verfahren.

Im Folgenden werden einige Begriffe der Erfindung näher beschrieben, die soweit nichts anderes ausgeführt ist, in der Beschreibung, den Figuren und den Ansprüchen entsprechend zu verstehen sind:
Ein "Objekt" ist ein dreidimensionales Gebilde, das durch den 3D Druckprozess erhalten wird und austauschbar auch als Formteil, Modell oder Bauteil bezeichnet werden kann.

Ein "Materialsystem" ist ein System von Komponenten, das zur Herstellung von Modellen in bekannten 3D Druckverfahren mit den dazu bekannten Vorrichtungen verwendet werden kann. Es besteht vorzugsweise aus getrennt vorgehaltenen Komponenten, die bei einem 3D Druckprozess in Kontakt gebracht werden und zur Herstellung von Formteilen dienen.

Ein "3D Druckverfahren" ist jegliches Verfahren mit dem dreidimensionalen Formteil hergestellt werden können. Beispielhaft sei hier das als "rapid prototyping" bezeichnete 3D Druckverfahren.

Ein "Binder" ist die mittels Druckkopf auf das Pulverbett aufgebrachte fluide oder wässrige Komponente des Materialsystems zur Herstellung eines Formteils.

"Dispersion" ist eine fluide Zusammensetzung, die partikuläre Bestandteile enthält, vorzugsweise ist dies eine wasserbasierte Zusammensetzung.

"Partikuläre Bestandteile" sind in dem Binder enthaltenen Komponenten, die vorzugsweise zur Verfestigung bei dem 3D Druckverfahren beitragen und in Größenbereichen (mittlerer Durchmesser) von 5nm bis 20µm vorliegen. Die partikulären Bestandteile in der Dispersion können aus allen mit den übrigen Bestandteilen kombinierbaren Materialien bestehen, beispielsweise anorganische, metallische, polymere Materialien.

"Partikelmaterial" oder "Partikel des Schichtbettes" ist das schichtweise aufgetragene Material, das durch Auftrag des Binders selektiv verfestigt wird und zum Aufbau eines Formteils dient. Hierfür können jedwede mit den übrigen Bestandteilen kombinierbare Materialien verwendet werden, beispielsweise anorganischer Sand.

Weitere bevorzugte Aspekte der Erfindung sind im Folgenden dargestellt:
Das erfindungsgemäße Materialsystem besteht vorzugsweise aus wässrigen Dispersionen unterschiedlichen Dispersionsgrades- von Molekülen bis zu Mikropartikeln - die durch gezieltes Destabilisieren eine sofortige Bindewirkung entfalten ohne dass das Lösemittel vollständig verdampft sein muss. Das erfindungsgemäße Verfahren sieht dem entsprechend eine Prozessführung vor, bei der eine solche Dispersion zu einem definierten Zeitpunkt gezielt destabilisiert wird und damit die Verfestigung eingeleitet wird.

Ein solches System schädigt den Druckkopf nicht durch Lösewirkung. Die Haltbarkeit der Dispersion bis zur gezielten Destabilisierung ist im Prinzip nicht begrenzt. Somit können keine unerwünschten Effekte durch Stillstandszeiten der Maschine auftreten. Das Einbringen von verbindenden Partikeln zwischen die statische Partikelmaterialschüttung bedingt einen geringen Schwund im System. Durch die gezielte Destabilisierung werden kurze Zeiten bis zum Entpacken realisiert. Anhaftungen werden vermieden, wenn das Partikelmaterial der Schüttung weitgehend nicht wasserlöslich ist. Das wasserbasierte System ist wesentlich umweltverträglicher als lösemittelbasierte Systeme.

Beispiele für solche Dispersionen können Acrylatdispersion, Polyurethandispersionen oder vorpolymerisierte Phenolharze sein.

Für die Stabilisierung der Dispersion werden unterschiedliche Mechanismen eingesetzt. Ziel dieser Mechanismen ist es das Agglomerieren der feinen Partikel zu verhindern. Somit können bei ausreichender Feinheit alleine die Wirkungen der thermischen Molekularbewegungen ausreichen, damit die Partikel in der Schwebe gehalten werden und nicht sedimentieren.

Ein wesentlicher Mechanismus ist der Einsatz von Molekülen die durch sterische Hinderung die räumliche Annäherung der Partikel verhindern. Diese Moleküle sitzen wie Härchen auf den Partikeln und verhindern so innigen Kontakt.

Ein weiterer Mechanismus ist die elektrostatische Abstoßung der Partikel in einer Lösung. Auf die wirksame Oberflächenladung (sog. Zeta-Potential) der Partikel kann in einer Lösung durch angepassten pH-Wert Einfluss genommen werden. Die gleichnamige Ladung der Partikel verhindert dann deren Annäherung. Beide genannten Mechanismen können auch kombiniert verwendet werden.

Das wesentliche Merkmal dieser Erfindung ist es diese Mechanismen gezielt im 3D Druckverfahren zu verwenden. Die stabilisierte Dispersion wird mit einem Tintenstrahldruckkopf zuverlässig verdruckt. Eine gezielte Destabilisierung erfolgt erst nach dem Austritt des Binders aus den Düsen. Dies kann durch eine Reaktion mit dem Partikelmaterial oder einem darin befindlichen Zusatzstoff erfolgen. Ebenso kann aber auch die Destabilisierung schichtweise oder am Ende des Bauprozesses erfolgen. Dies kann z.B. durch Wärmewirkung oder Strahlung erfolgen. Auch kann eine zweite Substanz mit einem weiteren Druckkopf aufgebracht werden.

Zur näheren Erläuterung wird die Erfindung anhand bevorzugter Ausführungsbeispiele nachfolgend unter Bezugnahme auf die Figuren näher beschrieben.

In den Figuren zeigt dabei:
Figur 1 ein Schema des 3D-Druckverfahrens
Figur 2 eine Illustration der Vorgänge beim Lösemittelverfahren nach dem Stand der Technik;

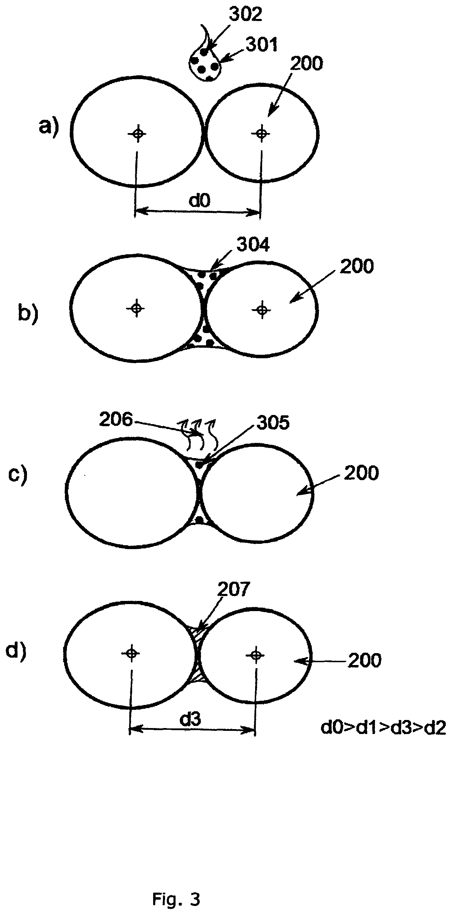

Figur 3 ein Schema des Vorganges beim Lösemitteldruck mit Zusatzstoffen nach dem Stand der Technik

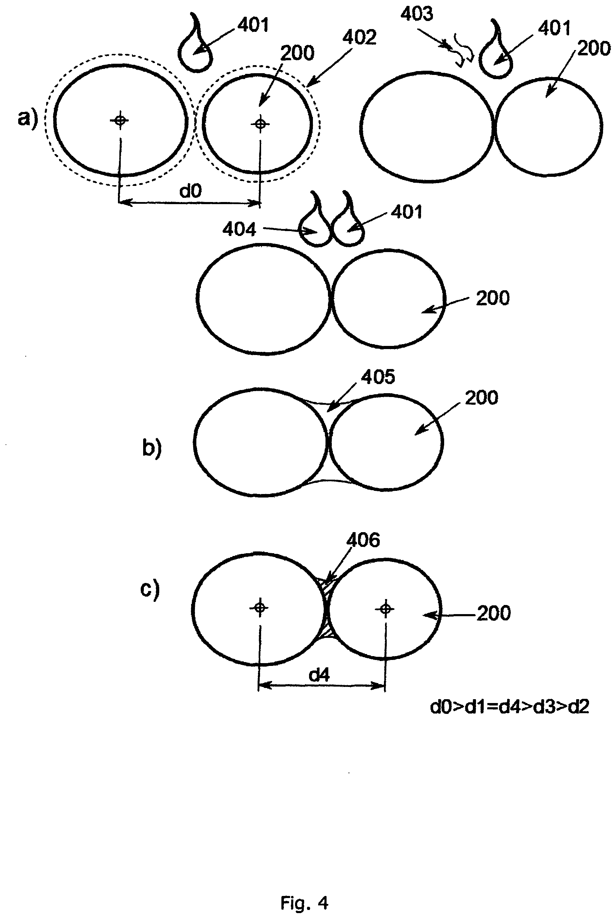

Figur 4 eine schematische Darstellung der polymerisierenden Verbindung von Partikeln nach dem Stand der Technik

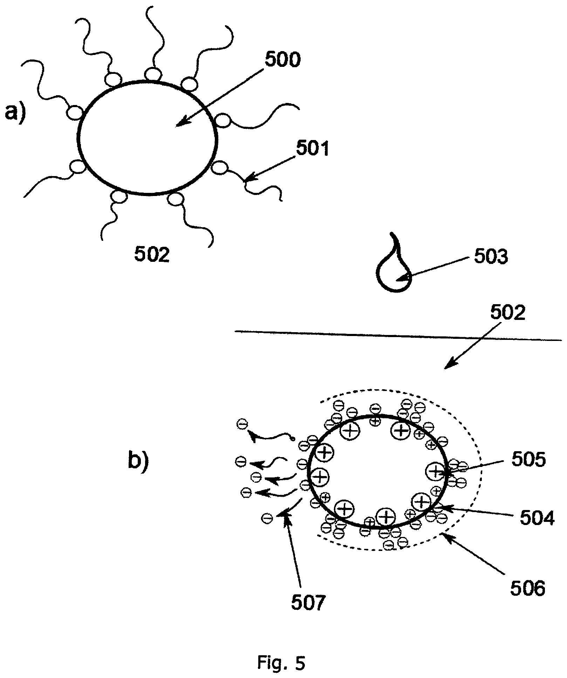

Figur 5 eine Illustration der Stabilisierung von dispersen Systemen
Figur 6 eine Darstellung als Schema der Vorgänge beim Destabilisieren
Figur 7 eine Darstellung des Lösemittelgehaltes als Funktion der Zeit in Abhängigkeit des Lösemittels

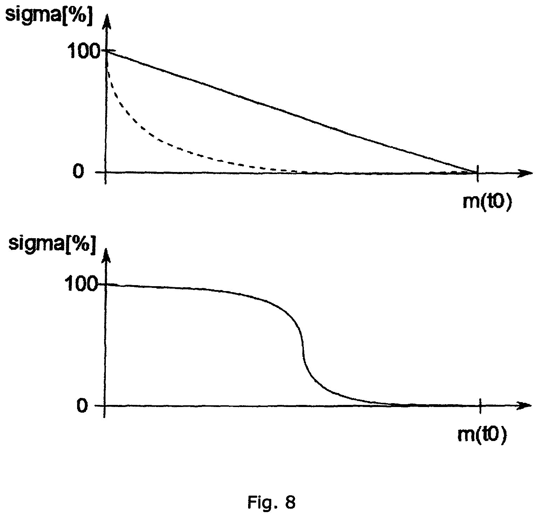

Figur 8 eine Darstellung der Festigkeit als Funktion des Lösemittelgehaltes für verschiedene Wirkprinzipien

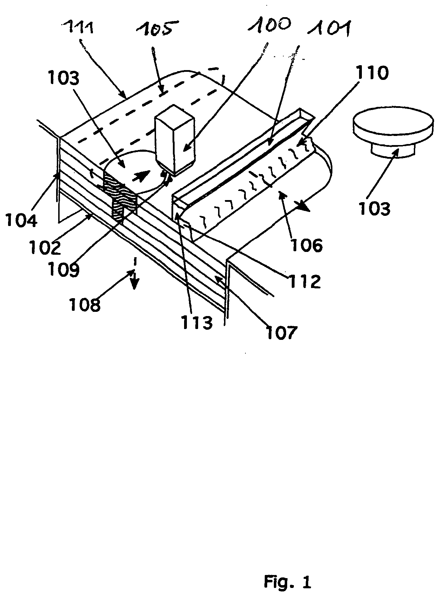

Figur 1 zeigt ein Schnittbild das beispielhaft den Ablauf des 3D-Druckprozesses illustriert. Zur Erstellung des Bauteils wird in einem Baufeld ein Druckkopf mäanderförmig über Pulver bewegt. Bei seiner Überfahrt werden an den Druckkopf Daten übertragen die einem Schnitt durch das gewünschte Objekt entsprechen. Die Daten werden als Bindertröpfchen ausgegeben, die die Partikel des Pulvers verbinden. Nach dem Bedrucken einer Schicht wird der Schichtkuchen durch eine Achse um eine Schichtstärke abgesenkt. Danach wird durch einen Beschichter eine weitere Schicht Pulver aufgetragen und glattgestrichen. Diese Vorgänge werden solange wiederholt bis der zu erstellende Körper fertig gestellt ist.

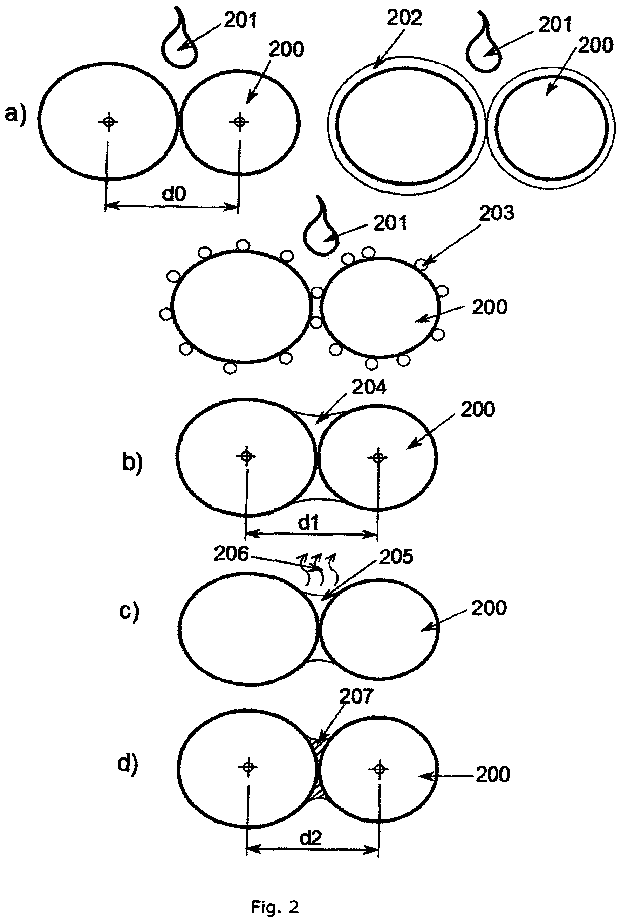

Möglichkeiten die Partikel im Pulver zu verbinden zeigt die Abbildung 2a. So können beispielsweise lösliche Pulverkörner durch ein geeignetes Lösemittel angelöst werden. Ebenso können Partikel umhüllt werden. Im Anschluss kann die Umhüllung wiederum durch das passende Lösemittel gelöst werden. Eine dritte Möglichkeit stellen Partikel dar, die eine andere Löslichkeit als die Hauptpulverpartikel aufweisen.

Als Partikel können sowohl Polymere, Kristalle wie Salz oder andere anorganische Stoffe zum Einsatz kommen. Bevor das Lösemittel den Grundstoff anlöst, zieht es sich durch Kapillarwirkung in den Kontaktbereich zwischen den Partikeln. Hier beginnt die Lösewirkung. Dabei reichert sich das Lösemittel immer weiter mit dem Basisstoff an.

Im Anschluss trocknet das Lösemittel durch Abdampfen ab. Dabei zieht sich das Vormals gelöste Material zusammen. Dieses Verhalten bewirkt einen makroskopischen Schwund. Zeitgleich verfestigt das Basismaterial. Ein festes Bauteil entsteht.

Eine Reduktion dieses Schwundes kann erzielt werden indem das Lösemittel mit einem Hilfsstoff der auch der Basismaterialwerkstoff sein kann gefüllt wird. Zur Bindewirkung trägt jetzt nicht nur das Lösemittelgemisch mit dem Basiswerkstoff bei, sondern auch der Hilfsstoff bei.

Ein ähnliches Konzept verfolgen polymerisierende Systeme. Hier wird das Lösemittel durch ein Monomer ersetzt. Das Monomer trifft auf einen Reaktionspartner im Pulverbett oder ein Reaktionspartner wird eingedruckt. Ebenso kann durch Strahlung eine Verfestigung erzielt werden. Der Vorteil eines solchen Systems liegt in einem weiter reduzierten Schwund. Die Festigkeit bildet sich schnell, da das Abdampfen nicht abgewartet werden muss.

Beim erfindungsgemäßen Verfahren wird eine stabilisierte Dispersion verdruckt. Diese wird gezielt destabilisiert und die Partikel setzen sich zwischen die Körner des Basismaterials. Durch den innigen Kontakt der Dispersionspartikel bildet sich rasch eine Festigkeit aus. Das Bauteil kann trotz eines erheblichen Restfluidanteils sicher entpackt werden.

Die Stabilisierung der Dispersion kann durch zwei wesentliche Mechanismen erreicht werden. Diese werden im Folgenden vereinfacht wiedergegeben.

Zum einen können sogenannte Dispersionsmittel verwendet werden, die zu einer sterischen Stabilisierung der Dispersion führen. Hierbei wird ein bipolares Molekül verwendet. Bei Polaritätsunterschieden zwischen der dispersen Phase und dem Dispersionsmedium ordnen sich die Dispersionsmittel so an, dass jeweils die gleichen Enden in das Medium reichen. Damit kann eine direkte Annäherung der Partikel in der Dispersion nicht stattfinden. Die Bildung von Agglomeraten wird verhindert und folglich bleibt die Dispersion stabil.

Eine weitere Möglichkeit besteht darin elektrostatisch zu stabilisieren. Dabei wird der Effekt genutzt, dass sich um einen geladenen Partikel in einem Medium Ionen entgegengesetzter Ladung sammeln und den Partikel insgesamt neutralisieren. Durch ein Verschieben des pH-Wertes kann diese Hülle aus Ionen verarmt werden und ein geladener Partikel entsteht. Sind die Partikel aus dem gleichem Grundstoff sind die Partikel nicht mehr neutral, sondern gleichartig geladen. Durch diese Ladung stoßen sich die Partikel ab und stabilisieren die Dispersion.

Als erfindungsgemäße Dispersionen sind besonders bevorzugt Suspensionen mit einer Partikelgröße von 10nm bis 10µm geeignet. Als Grundstoffe können als feine Partikel vorliegende oder herstellbare Stoffe Verwendung finden. Bevorzugt sind - nicht erschöpfend - anorganische Partikel wie Gläser, Sand, Korund, Bentonite, Tone, amorphe Kieselsäure, Wassergläser, Kohlenstoff, Karbide, Oxidkeramik, Silikatkeramik metallische Partikel wie Aluminium, Titan, Eisen, Cobalt, Bronze, Messing, Kupfer und polymere Partikel wie Polystyrol, Polymethylmethakrylat, Polyethylmethakrylat, radikalisch erzeugte Mischpolymere, Polyurethane, Resolharze, Novolake, Phenolharze.

Ein Beispiel für ein stabilisiertes Medium kann eine Suspension aus PMMA sein. Als stabilisierende Substanz wird der wässrigen Dispersion Polyvinylalkohol zugesetzt. Es können bis zu 50 Gew.-%, vorzugsweise bis zu 60 Gew.-% PMMA Substanz in die Suspension gegeben werden, bis das PMMA ausfällt.

Ein weiteres Beispiel ist Phenolharz, das in einer Suspension vorliegt.

Ein drittes Beispiel sind keramische Suspensionen. Ähnlich zu Schlickern werden hier Suspensionshilfen zugegeben. Diese bewirken die Suspension mit extrem hohen Partikelladungen ausgeführt werden können. In verdünnter Form können diese Suspension auch mit einem Tintenstrahldruckkopf verarbeitet werden.

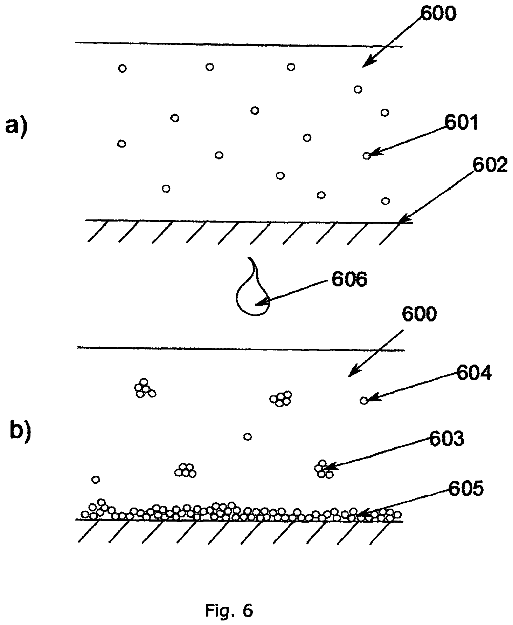

Figur 6 zeigt schematisch die Vorgänge bei der Destabilisierung einer Dispersion. Die ursprünglich ungefähr gleich verteilten Partikel, die sich durch Molekularbewegungen auf Grund ihrer Kleinheit in der Schwebe halten können, Agglomerieren zu größeren Verbünden. Diese sinken im Dispersionsmedium ab. Durch ihren innigen Kontakt entstehen Bindungskräfte die makroskopisch als Festigkeit wirken. Am Behälterboden bildet sich ein Film.

Ebenso wirkt die Destabilisierung der Dispersion in den Partikeln des Pulvers für den 3D-Druck. Das Ausfallen der Partikel überzieht alles mit einem Film der eine frühe Festigkeit bringt. Diese kann je nach Einstellung des Prozesses ausreichen um das Bauteil zu entpacken und einem Nachbehandlungsschritt zu unterziehen.

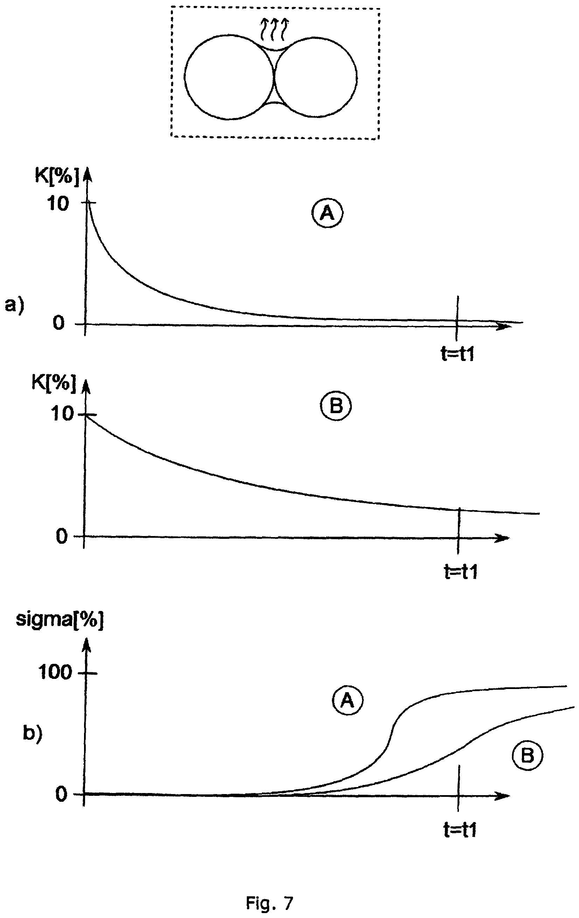

Figur 7 zeigt die Bildung der Festigkeit in verschiedenen konventionellen lösemittelbasierten Systemen. Das Lösemittel wirkt als innerer Weichmacher. Erst ab einem sehr geringen Gehalt von Lösemittel steigt die Festigkeit rasch an (System A). Dieser Vorgang kann je nach Abdampfrate des Lösemittels aus dem Basismaterial weiter verzögert werden (System B).

Gegenüber dem konventionellen System zeigt der Vorgang der Destabilisierung einer Dispersion eine gänzlich andere Festigkeitsentwicklung, da das Dispersionsmedium kein Lösemittel für die disperse Phase darstellt. Deshalb steigt die Festigkeit zum Zeitpunkt des Ausfallens der Partikel stark an. Nach diesem Zeitpunkt werden die Bindungen zwischen den Pulverkörnern durch Abdampfen des Dispersionsmediums nur noch langsam verstärkt.

Dieser Effekt führt zu einer schnellen Entpackbarkeit der Bauteile, als mit konventionellen Systemen. Als Beispiel soll ein Phenolharzsystem dienen. Dieses System kann durch die Zugabe eines Esters gezielt destabilisiert werden. Der Ester ist zweckmäßiger Weise im Pulver eingemischt. Als Vergleich wird ein Versuch mit einem unbehandelten Pulver durchgeführt. Dabei ist ein gedruckter Prüfriegel mit dem Ester bereits nach wenigen Stunden entpackbar. Bei gleicher Festigkeit weist die Probe mit Ester einen wesentlich höheren Wasseranteil auf. Der Riegel ohne Ester kann erst nach einem Tag sicher entpackt werden.

### Bezugszeichenliste

- 100: Druckkopf
- 101: Beschichter
- 102: Bauplattform
- 103: Körper
- 104: Vorrichtung
- 105: Druckkopfbahn
- 106: Beschichterbahn
- 107: gebaute Schichten
- 108: Richtung der Bauplattform
- 109: Mikrotropfen
- 110: Partikelmaterialwalze
- 111: Bauraum
- 112: Beschichterspalt
- 113: Pulvervorrat
- 200: Pulverpartikel
- 201: Bindertropfen
- 202: Umhüllung
- 203: Zusatzpartikel
- 204: Binder im Kontaktbereich
- 205: Reduzierter Binder im Kontaktbereich
- 206: Abdampfender Binder
- 207: Verfestigter Binder
- 301: Binder mit Partikeln
- 302: Gelöster Bestandteil
- 304: Binder mit Partikeln im Kontaktbereich
- 305: Bestandteil im Kontaktbereich
- 401: Binder
- 402: zweite Komponente
- 403: Aktivierung durch Strahlung
- 404: Aktivierung durch zweite Komponente
- 405: Zwei-Komponenten-Material im Kontaktbereich
- 406: Verfestigter Binder
- 500: Dispergierter Partikel
- 501: Dispersionsmittel
- 502: Dispersionsmedium
- 503: Zugabestoff zur elektrostatischen Stabilisierung
- 504: Ion
- 505: Teilchenladung
- 506: Linie der Neutralität
- 507: Auflösung der Neutralität
- 600: Dispersionsmedium
- 601: Partikel
- 602: Boden
- 603: Agglomerat
- 604: Zurückbleibender Partikel
- 605: Film
- 606: Destabilisierung

## Patentansprüche

1. Materialsystem zum schichtweisen Aufbau von Modellen, umfassend einen Binder, wobei der Binder eine durch eine pH - Wertänderung destabilisierbare wässrige Dispersion ist, und Partikelmaterial zum schichtweisen Aufbau,
**dadurch gekennzeichnet, dass** die im Wesentlichen wässrige Dispersion als Bestandteil partikuläre Bestandteile umfasst, wobei diese ausgewählt sind aus der Gruppe bestehend aus polymeren Partikeln wie Polystyrol, Polymethylmethakrylat (PMMA), Polyethylmethakrylat (PEMA), oder/und radikalisch erzeugte Mischpolymere, Polyurethane, Resolharze, Novolake, Phenolharze, und wobei das Partikelmaterial oder ein Zusatzstoff zur pH-Wertänderung zur Destabilisierung der wässrigen Dispersion mittels einer Reaktion der Dispersion mit dem Partikelmaterial oder der darin befindlichen Säure oder der darin befindlichen Ester-Verbindung enthalten ist oder der Binder ein oder mehrere Phenylalkohole beinhaltet und das Partikelmaterial einen Ester umfasst.

2. Materialsystem nach Anspruch 1 zum schichtweisen Aufbau von Modellen,
**dadurch gekennzeichnet, dass** partikuläre Bestandteile ausgewählt sind aus der Gruppe bestehend aus anorganische Partikeln wie Gläser, Sand, Korund, Bentonite, Tone, amorphe Kieselsäure, Wassergläser, Kohlenstoff, Karbide, Oxidkeramik, Silikatkeramik, oder/und metallische Partikel wie Aluminium, Titan, Eisen, Cobalt, Bronze, Messing, Kupfer.

3. Materialsystem nach Anspruch 1 oder 2, **dadurch gekennzeichnet, dass** die wässrige Dispersion eine Acrylatdispersion, eine Polyurethandispersion oder eine auf vorpolymerisierten Phenolharzen basierte Dispersion ist, vorzugsweise **dadurch gekennzeichnet, dass** die wässrige Dispersion einen pH-Wert von 7 bis 9 aufweist

4. Materialsystem nach Anspruch 1 oder 2,
**dadurch gekennzeichnet, dass** das Partikelmaterial ausgewählt ist aus der Gruppe bestehend aus natürlichen nachwachsenden Rohstoffen, polymeren Kunststoffen, Metallen, Keramiken, Sanden, anorganischen Sanden und SiO₂.

5. Verfahren zum schichtweisen Aufbau von Modellen, wobei in einer Vorrichtung zum schichtweisen Aufbau von Modellen unter Verwendung eines Materialsystems nach einem der Ansprüche 1 - 4 a. eine Pulverschicht mit Partikelmaterial aufgebracht wird und b. selektiv mittels Druckkopf ein Binder aufgebracht wird, Schritte a) und b) solange wiederholt werden bis ein gewünschtes Modell aufgebaut ist, c. der Binder durch eine Destabilisierung aktiviert wird, wobei eine pH-Änderung mittels einer Reaktion der Dispersion mit dem Partikelmaterial oder einem darin befindlichen Zusatzstoff einer Säure oder einer Esterverbindung, durch in Kontakt bringen von Binder mit dem Partikelmaterial des Pulverbettes erfolgt, d. das so erhaltene Modell in üblicher Weise entpackt wird und e. das Modell gegebenenfalls weiteren Bearbeitungsschritten unterzogen wird.

6. Verfahren nach Anspruch 5, **dadurch gekennzeichnet, dass** die Pulverschicht ein Partikelmaterial umfasst, das ausgewählt ist aus der Gruppe bestehend aus natürlichen nachwachsenden Rohstoffen, polymeren Kunststoffen, Metallen, Keramiken, Sanden, anorganischen Sanden und SiO₂.

7. Verfahren nach einem der Ansprüche 5 bis 6, **dadurch gekennzeichnet, dass** das Partikelmaterial eine Säure enthält, vorzugsweise
**dadurch gekennzeichnet, dass** die Destabilisierung schichtweise oder am Ende des Schichtauftrages erfolgt, vorzugsweise
**dadurch gekennzeichnet, dass** der weitere Bearbeitungsschritt eine Wärmebehandlung ist.

## Claims

1. A material system for the layered construction of models, comprising a binder, said binder being an aqueous dispersion which can be destabilized by a pH change, and particulate material for the layered construction,
**characterized in that** the essentially aqueous dispersion comprises particulate constituents as a component, said constituents being selected from the group consisting of polymeric particles such as polystyrene, polymethyl methacrylate (PMMA), polyethyl methacrylate (PEMA), or/and radically produced copolymers, polyurethanes, resol resins, novolaks, phenolic resins, and the particulate material or a pH modifier additive being included to destabilize the aqueous dispersion by means of a reaction of the dispersion with the particulate material or the acid or ester compound therein, or the binder including one or more phenyl alcohols and the particulate material comprising an ester.

2. The material system according to claim 1 for the layered construction of models, **characterized in that** particulate constituents are selected from the group consisting of inorganic particles such as glasses, sand, corundum, bentonites, clays, amorphous silica, water glasses, carbon, carbides, oxide ceramics, silicate ceramics, or/and metallic particles such as aluminium, titanium, iron, cobalt, bronze, brass, copper.

3. The material system according to claim 1 or 2, **characterized in that** the aqueous dispersion is an acrylate dispersion, a polyurethane dispersion or a dispersion based on prepolymerized phenolic resins, preferably **characterized in that** the aqueous dispersion has a pH value of 7 to 9.

4. The material system according to claim 1 or 2,
**characterized in that** the particulate material is selected from the group consisting of natural renewable raw materials, polymeric plastics, metals, ceramics, sands, inorganic sands and SiO₂.

5. A method for the layered construction of models, wherein in a device for the layered construction of models using a material system according to any one of claims 1 to 4, a. a powder layer with particulate material is applied and b. a binder is selectively applied by means of a print head, steps a) and b) are repeated until a desired model has been constructed, c. the binder is activated by destabilization, a pH change taking place by means of a reaction of the dispersion with the particulate material or an additive contained therein, of an acid or an ester compound, by bringing the binder into contact with the particulate material of the powder bed, d. the model thus obtained is unpacked in the usual manner, and e. the model is optionally subjected to further processing steps.

6. The method according to claim 5, **characterized in that** the powder layer comprises a particulate material which is selected from the group consisting of natural renewable raw materials, polymeric plastics, metals, ceramics, sands, inorganic sands and SiO₂.

7. The method according to any one of claims 5 to 6, **characterized in that** the particulate material contains an acid, preferably
**characterized in that** the destabilization takes place layer by layer or at the end of the layer application, preferably
**characterized in that** the further processing step is a heat treatment.

## Revendications

1. Système de matériaux de fabrication de modèles couche par couche, comprenant un liant, ledit liant étant une dispersion aqueuse déstabilisable par une variation de pH, et un matériau particulaire pour la fabrication couche par couche,
**caractérisé en ce que** la dispersion essentiellement aqueuse comprend comme composant des constituants particulaires, ceux-ci étant choisis dans le groupe constitué par des particules polymères telles que le polystyrène, le polyméthacrylate de méthyle (PMMA), le polyméthacrylate d'éthyle (PEMA), ou/et des copolymères produits par voie radicalaire, des polyuréthanes, des résines de résol, des novolaques, des résines phénoliques, et le matériau particulaire ou un additif pour modifier le pH pour déstabiliser la dispersion aqueuse au moyen d'une réaction de la dispersion avec le matériau particulaire ou l'acide qui s'y trouve ou le composé ester qui s'y trouve étant contenu, ou le liant contenant un ou plusieurs alcools phényliques et le matériau particulaire comprenant un ester.

2. Système de matériaux selon la revendication 1 pour la fabrication de modèles couche par couche,
**caractérisé en ce que** les constituants particulaires sont choisis dans le groupe constitué par les particules inorganiques telles que les verres, le sable, le corindon, les bentonites, les argiles, la silice amorphe, les verres solubles, le carbone, les carbures, la céramique d'oxyde, la céramique de silicate, ou/et les particules métalliques telles que l'aluminium, le titane, le fer, le cobalt, le bronze, le laiton, le cuivre.

3. Système de matériaux selon la revendication 1 ou 2, **caractérisé en ce que** la dispersion aqueuse est une dispersion d'acrylate, une dispersion de polyuréthane ou une dispersion à base de résines phénoliques prépolymérisées, de préférence **caractérisé en ce que** la dispersion aqueuse a un pH de 7 à 9.

4. Système de matériaux selon la revendication 1 ou 2,
**caractérisé en ce que** le matériau particulaire est choisi dans le groupe constitué par des matières premières naturelles renouvelables, des matières plastiques polymères, des métaux, des céramiques, des sables, des sables inorganiques et le SiO₂.

5. Procédé de fabrication de modèles couche par couche, dans lequel, dans un dispositif de fabrication de modèles couche par couche utilisant un système de matériaux selon l'une quelconque des revendications 1 à 4, a. une couche de poudre avec un matériau particulaire est appliquée et b. un liant est appliqué sélectivement au moyen d'une tête d'impression, les étapes a) et b) sont répétées jusqu'à ce qu'un modèle souhaité soit fabriqué, c. le liant est activé par une déstabilisation, une modification du pH étant effectuée au moyen d'une réaction de la dispersion avec le matériau particulaire ou un additif d'un acide ou d'un composé ester qui s'y trouve, par mise en contact du liant avec le matériau particulaire du lit de poudre, d. le modèle ainsi obtenu est déconditionné de manière habituelle et e. le modèle est éventuellement soumis à des étapes de traitement supplémentaires.

6. Procédé selon la revendication 5, **caractérisé en ce que** la couche de poudre comprend un matériau particulaire choisi dans le groupe constitué par des matières premières naturelles renouvelables, des matières plastiques polymères, des métaux, des céramiques, des sables, des sables inorganiques et le SiO₂.

7. Procédé selon l'une quelconque des revendications 5 à 6, **caractérisé en ce que** le matériau particulaire contient un acide, de préférence
**caractérisé en ce que** la déstabilisation s'effectue couche par couche ou à la fin de l'application des couches, de préférence
**caractérisé en ce que** l'étape de traitement supplémentaire est un traitement thermique.
